# EUROPEAN PATENT APPLICATION

(11) **EP 4 462 641 A2**
(43) Date of publication of application: **13.11.2024**
(21) Application number: 24171502.8
(22) Date of filing: 22.04.2024
(51) Int. Cl.: H02J 50/12, H02J 50/80, H04B 5/79

(54) **WIRELESS CHARGING SYSTEM**

(30) Priority: 09.05.2023 TW 112117102
(71) Applicant: APh ePower Co., Ltd., Kaohsiung City 821 (TW)
(72) Inventor: SU, Hsiu-Hsien, Kaohsiung City 821 (TW); LEE, Tsung-Shiun, Kaohsiung City 821 (TW); TZENG, Yun-Chi, Kaohsiung City 821 (TW)
(74) Representative: Becker, Eberhard

(57) **Abstract**

A wireless charging system (10, 20) is provided. The wireless charging system (10, 20) includes a wireless power supply platform (100, 300), a first device (200_1, 200_2, 400_1, 400_2), and a second device (200_1, 200_2, 400_1, 400_2). The wireless power supply platform (100, 300) provides a wireless suppling power (WP). The first device (200_1, 200_2, 400_1, 400_2) includes a first power receiving circuit (210_1, 210_2, 410_1, 410_2), a first power switch (SW1, SW2), and a first control circuit (220_1, 220_2, 330, 420_1, 420_2). The second device (200_1, 200_2, 400_1, 400_2) includes a second power receiving circuit (210_1, 210_2, 410_1, 410_2), a second power switch (SW1, SW2), and a second control circuit (220_1, 220_2, 330, 420_1, 420_2). The second control circuit (220_1, 220_2, 330, 420_1, 420_2) communicates with the first control circuit (220_1, 220_2, 330, 420_1, 420_2) to determine a coordinated switching state of the first power switch (SW1, SW2) and the second power switch (SW1, SW2). The coordinated switching state determines a first output voltage value (VO1, VO1_1~VO1_4, VO2, VO2_1~VO2_4) generated by the first power receiving circuit (210_1, 210_2, 410_1, 410_2) according to the wireless suppling power (WP) and a second output voltage value (VO1, VO1_1~VO1_4, VO2, VO2_1~VO2_4) generated by the second power receiving circuit (210_1, 210_2, 410_1, 410_2) according to the wireless suppling power (WP).

## Description

### BACKGROUND

### Technical Field

The disclosure relates to a charging system, and in particular to a wireless charging system.

### Description of Related Art

Generally speaking, in a wireless charging system, a wireless power supply platform can use wireless charging to charge a device to be charged. The device to be charged is, for example, an electronic device or a mobile vehicle with a wireless charging function. Therefore, the wireless charging system provides convenience of charging.

The wireless power supply platform may supply power to multiple devices to be charged. It should be noted that power specifications of the devices to be charged may not be exactly the same. The power specification is, for example, a charging voltage or an operating power. When the wireless power supply platform supplies power to the devices to be charged with different power specifications, the devices to be charged interfere with each other, which seriously reduces the operating stability and the charging stability of the devices to be charged.

As such, it can be seen that how to reduce the mutual interference between the devices to be charged during charging is one of the research focuses of persons skilled in the art.

### SUMMARY

The disclosure provides a wireless charging system, which can improve stability of a device to be charged during wireless charging.

A wireless charging system of the disclosure includes a wireless power supply platform, a first device, and a second device. The wireless power supply platform provides a wireless suppling power. The first device includes a first power receiving circuit, a first power switch, and a first control circuit. The first power switch is coupled to the first power receiving circuit. The first control circuit is coupled to the first power switch. The second device includes a second power receiving circuit, a second power switch, and a second control circuit. The second power switch is coupled to the second power receiving circuit. The second control circuit is coupled to the second power switch. The second control circuit communicates with the first control circuit to determine a coordinated switching state of the first power switch and the second power switch. The coordinated switching state determines a first output voltage value generated by the first power receiving circuit according to the wireless suppling power and a second output voltage value generated by the second power receiving circuit according to the wireless suppling power.

Based on the above, the second control circuit communicates with the first control circuit to determine the coordinated switching state of the first power switch and the second power switch. The coordinated switching state determines the first output voltage value generated by the first power receiving circuit according to the wireless suppling power and the second output voltage value generated by the second power receiving circuit according to the wireless suppling power. In this way, based on the communication between the second control circuit and the first control circuit, the first device and the second device can both use the coordinated switching state to obtain the output voltage values that meet power specifications.

In order for the features and advantages of the disclosure to be more comprehensible, the following specific embodiments are described in detail in conjunction with the drawings.

### BRIEF DESCRIPTION OF THE DRAWINGS

FIG. 1 is a schematic diagram of a wireless charging system according to an embodiment of the disclosure.
FIG. 2 is a schematic diagram of a circuit of a wireless charging system according to an embodiment of the disclosure.
FIG. 3 is a schematic diagram of converted power and output voltage value in different coordinated switching states according to the disclosure.
FIG. 4 is a schematic diagram of gain according to an embodiment of the disclosure.
FIG. 5 is a schematic diagram of gain in a first coordinated switching state according to an embodiment of the disclosure.
FIG. 6 is a schematic diagram of gain in a second coordinated switching state according to an embodiment of the disclosure.
FIG. 7 is a schematic diagram of communication of a wireless charging system according to an embodiment of the disclosure.

### DESCRIPTION OF THE EMBODIMENTS

Some embodiments of the disclosure will be described in detail with reference to the drawings. For the reference numerals cited in the following description, when the same reference numerals appear in different drawings, the reference numerals will be regarded as referring to the same or similar elements. The embodiments are only a part of the disclosure and do not disclose all possible implementations of the disclosure. More specifically, the embodiments are merely examples in the claims of the disclosure.

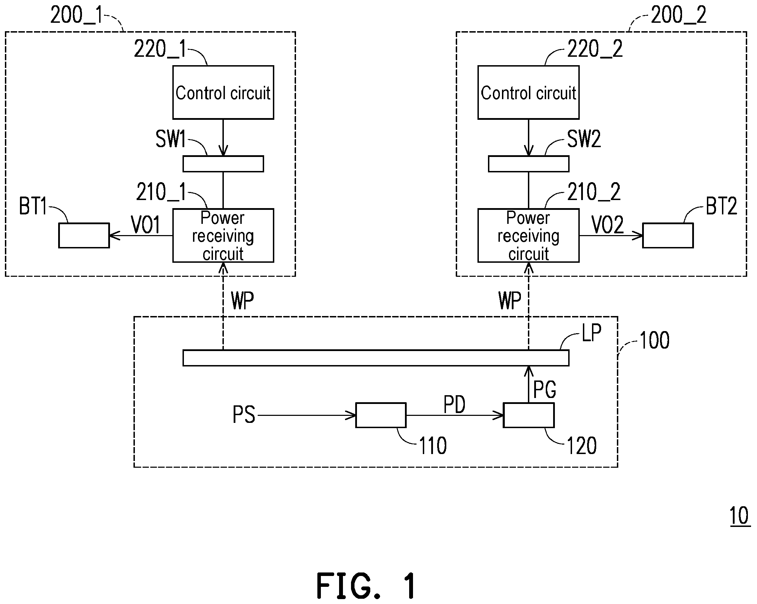

Please refer to FIG. 1. FIG. 1 is a schematic diagram of a wireless charging system according to an embodiment of the disclosure. In the embodiment, a wireless charging system 10 includes a wireless power supply platform 100 and devices 200_1 and 200_2. The wireless power supply platform 100 provides a wireless suppling power WP. The devices 200_1 and 200_2 are respectively, for example, electronic devices or mobile vehicles with wireless charging functions. For example, the device 200_1 may be a portable electronic device, an electric vehicle (EV), or an automated guided vehicle (AGV) with a wireless charging function, but the disclosure is not limited thereto.

In the embodiment, the device 200_1 includes a power receiving circuit 210_1, a power switch SW1, and a control circuit 220_1. The power switch SW1 is coupled to the power receiving circuit 210_1. The control circuit 220_1 is coupled to the power switch SW1. The device 200_2 includes a power receiving circuit 210_2, a power switch SW2, and a control circuit 220_2. The power switch SW2 is coupled to the power receiving circuit 210_2. The control circuit 220_2 is coupled to the power switch SW2. The control circuit 220_2 communicates with the control circuit 220_1 to determine a coordinated switching state of the power switches SW1 and SW2. In addition, the coordinated switching state determines an output voltage value VO1 generated by the power receiving circuit 210_1 according to the wireless suppling power WP and an output voltage value VO2 generated by the power receiving circuit 210_2 according to the wireless suppling power WP.

For example, based on a power specification of the device 200_1, the device 200_1 uses an output power with the output voltage value VO1 to run or charge. Based on a power specification of the device 200_2, the device 200_2 uses an output power with the output voltage value VO2 to run or charge. The wireless power supply platform 100 provides the wireless suppling power WP to a field (not shown). When the devices 200_1 and 200_2 enter the field, the control circuit 220_2 communicates with the control circuit 220_1. Therefore, the control circuit 220_1 learns the power specification of the device 200_2. The control circuit 220_2 also learns the power specification of the device 200_1. The control circuit 220_1 controls a switching state of the power switch SW1. The control circuit 220_2 controls a switching state of the power switch SW2. When the devices 200_1 and 200_2 enter the field, the switching states of the power switches SW1 and SW2 affect the output voltage value VO1 generated by the power receiving circuit 210_1 and also affect the output voltage value VO2 generated by the power receiving circuit 210_2.

It is worth mentioning here that the control circuit 220_1 communicates with the control circuit 220_2 to determine the coordinated switching state of the power switches SW1 and SW2. The coordinated switching state determines the output voltage value VO1 generated by the power receiving circuit 210_1 according to the wireless suppling power WP, and also determines the output voltage value VO2 generated by the power receiving circuit 210_2 according to the wireless suppling power WP. In this way, based on the communication between the control circuit 220_1 and the control circuit 220_2, the devices 200_1 and 200_2 can both use the coordinated switching state to obtain the output voltage values VO1 and VO2 that meet the power specifications. Therefore, based on the communication between the control circuit 220_1 and the control circuit 220_2, the mutual interference between the devices 200_1 and 200_2 during charging can be reduced.

In the embodiment, the device 200_1 also includes a battery module BT1. The battery module BT1 is coupled to the power receiving circuit 210_1. Based on the power specification of the device 200_1, the battery module BT1 stores the output power with the output voltage value VO1. In the embodiment, the battery module BT1 includes an aluminum-ion battery. The aluminum-ion battery has a high charge-discharge rate (C-rate). Therefore, the battery module BT1 can achieve fast charging. In addition, the device 200_1 also uses the output power of the output voltage value VO1 to drive a load element (for example, a motor).

Similar to the device 200_1, the device 200_2 also includes a battery module BT2. The battery module BT2 is coupled to the power receiving circuit 210_2. Based on the power specification of the device 200_2, the battery module BT2 stores the output power with the output voltage value VO2. In the embodiment, the battery module BT2 includes an aluminum-ion battery. The aluminum-ion battery has a high C-rate. Therefore, the battery module BT2 can achieve fast charging. In addition, the device 200_2 also uses the output power of the output voltage value VO2 to drive a load element.

In the embodiment, the wireless power supply platform 100 includes an inverter 110, a resonance circuit 120, and a loop LP. The inverter 110 receives an input power PS, and converts the input power PS into a converted power PD. In the embodiment, the inverter 110 may be a full-bridge inverter circuit. The input power PS is a direct current power supply. The converted power PD is an alternating current power supply. The resonance circuit 120 is coupled to the inverter 110. The resonance circuit 120 performs a resonance operation on the converted power PD to generate the converted power PD. The loop LP is coupled to the resonance circuit 120. The loop LP receives the converted power PD and outputs the wireless suppling power WP according to the converted power PD. In the embodiment, the wireless power supply platform 100 transmits the wireless suppling power WP to the power receiving circuits 210_1 and 210_2 through magnetic field coupling.

In the embodiment, the power switches SW1 and SW2 may be respectively implemented by transistor switches that are well known to persons skilled in the art.

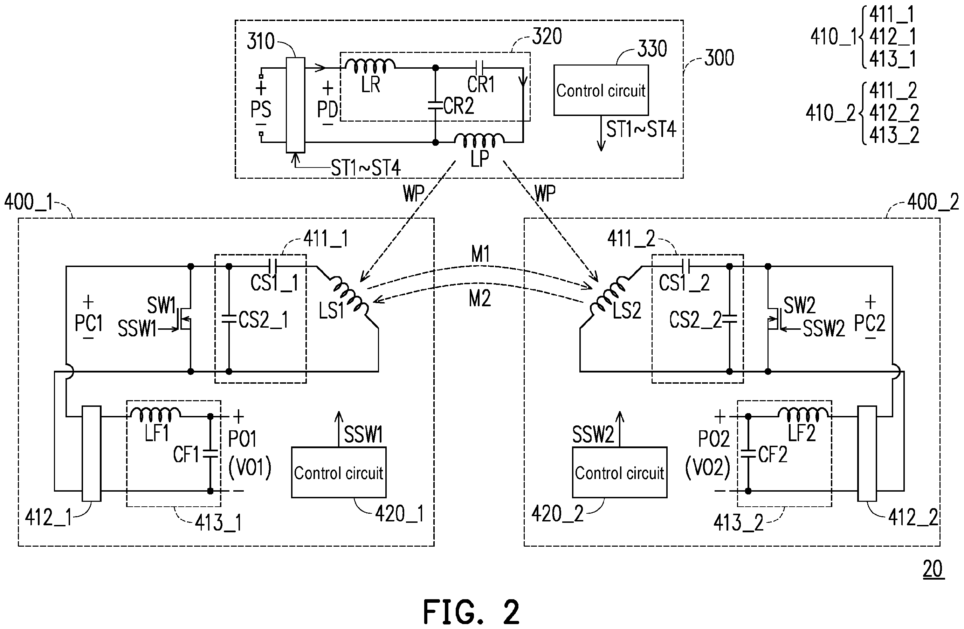

Please refer to FIG. 2. FIG. 2 is a schematic diagram of a circuit of a wireless charging system according to an embodiment of the disclosure. In the embodiment, a wireless charging system 20 includes a wireless power supply platform 300 and devices 400_1 and 400_2. The wireless power supply platform 300 includes an inverter 310, a resonance circuit 320, a control circuit 330, and a loop LP. The inverter 310 is controlled by the control circuit 330 to receive an input power PS and convert the input power PS into a converted power PD. The resonance circuit 320 is coupled to the inverter 310. The resonance circuit 320 performs a resonance operation on the converted power PD to generate the converted power PD. The loop LP is coupled to the resonance circuit 320. The loop LP outputs a wireless suppling power WP according to the converted power PD.

Taking the embodiment as an example, the resonance circuit 320 includes an inductor LR and capacitors CR1 and CR2 (the disclosure is not limited to the circuit configuration of the resonance circuit 320). A first terminal of the inductor LR is coupled to a first output terminal of the inverter 310. A first terminal of the capacitor CR1 is coupled to a second terminal of the inductor LR. A second terminal of the capacitor CR1 is coupled to a first terminal of the loop LP. A first terminal of the capacitor CR2 is coupled to the second terminal of the inductor LR. A second terminal of the capacitor CR2 is coupled to a second terminal of the loop LP and a second output terminal of the inverter 310.

In the embodiment, the device 400_1 includes a power receiving circuit 410_1, a power switch SW1, and a control circuit 420_1. The power receiving circuit 410_1 includes a loop LS1, a resonance circuit 411_1, and a rectify circuit 412_1. The resonance circuit 411_1 is coupled to the power switch SW1 and the loop LS1. The resonance circuit 411_1 receives the wireless suppling power WP through the loop LS1, and gains the wireless suppling power WP to generate a converted power PC1. The rectify circuit 412_1 is coupled to the resonance circuit 411_1. The rectify circuit 412_1 rectifies the converted power PC1 to generate an output power PO1 with an output voltage value VO1.

Taking the embodiment as an example, the resonance circuit 411_1 includes capacitors CS1_1 and CS2_1. A first terminal of the capacitor CS1_1 is coupled to a first terminal of the loop LS1. A second terminal of the capacitor CS1_1 is coupled to a first terminal of the power switch SW1. A first terminal of the capacitor CS2_1 is coupled to the second terminal of the capacitor CS1_1. A second terminal of the capacitor CS2_1 is coupled to a second terminal of the loop LS1 and a second terminal of the power switch SW1. A control terminal of the power switch SW1 is coupled to the control circuit 420_1. The control circuit 420_1 may use a switching signal SSW1 to control the switching state of the power switch SW1.

In the embodiment, when the power switch SW1 is disconnected, the resonance circuit 411_1 and the loop LS1 perform a first resonance operation. To further explain, when the power switch SW1 is disconnected, the capacitors CS1_1 and CS2_1 and the loop LS1 perform the first resonance operation of the power receiving circuit 410_1.

On the other hand, when the power switch SW1 is conducted, the resonance circuit 411_1 and the loop LS1 perform a second resonance operation of the power receiving circuit 410_1. To further explain, when the power switch SW1 is conducted, the capacitor CS2_1 is bypassed. Therefore, the capacitor CS1_1 and the loop LS1 perform the second resonance operation of the power receiving circuit 410_1. In addition, in the second resonance operation of the power receiving circuit 410_1, the loop LS1 is used as a relay resonance loop. The loop LS1 can transmit an induced power to other devices (including the device 400_2) in the same field through inductive coupling.

It should be noted that the disconnection or the conduction of the power switch SW1 determines the number of capacitors participating in the resonance operation of the power receiving circuit 410_1. In the first resonance operation of the power receiving circuit 410_1, two capacitors CS1_1 and CS2_1 participate in the resonance operation. In the second resonance operation of the power receiving circuit 410_1, the capacitor CS1_1 participates in the resonance operation. Therefore, the gain generated by the power receiving circuit 410_1 in the first resonance operation is greater than the gain generated by the power receiving circuit 410_1 in the second resonance operation.

In the embodiment, the device 400_2 includes a power receiving circuit 410_2, a power switch SW2, and a control circuit 420_2. The receiving circuit 410_2 includes a loop LS2, a resonance circuit 411_2, and a rectify circuit 412_2. The resonance circuit 411_2 is coupled to the power switch SW2 and the loop LS2. The resonance circuit 411_2 receives the wireless suppling power WP through the loop LS2, and gains the wireless suppling power WP to generate a converted power PC2. The rectify circuit 412_2 is coupled to the resonance circuit 411_2. The rectify circuit 412_2 rectifies the converted power PC2 to generate an output power PO2 with an output voltage value VO2.

Taking the embodiment as an example, the resonance circuit 411_2 includes capacitors CS1_2 and CS2_2. A first terminal of the capacitor CS1_2 is coupled to a first terminal of the loop LS2. A second terminal of the capacitor CS1_2 is coupled to a first terminal of the power switch SW2. A first terminal of the capacitor CS2_2 is coupled to the second terminal of the first capacitor. A second terminal of the capacitor CS2_2 is coupled to a second terminal of the loop LS2 and a second terminal of the power switch SW2. A control terminal of the power switch SW2 is coupled to the control circuit 420_2. The control circuit 420_2 may use a switching signal SSW2 to control the switching state of the power switch SW2.

In the embodiment, when the power switch SW2 is disconnected, the resonance circuit 411_2 and the loop LS2 perform a first resonance operation. To further explain, when the power switch SW2 is disconnected, the capacitors CS1_2 and CS2_2 and the loop LS2 perform the first resonance operation of the power receiving circuit 410_2.

On the other hand, when the power switch SW2 is conducted, the resonance circuit 411_2 and the loop LS2 perform a second resonance operation of the power receiving circuit 410_2. To further explain, when the power switch SW2 is conducted, the capacitor CS2_2 is bypassed. Therefore, the capacitor CS1_2 and the loop LS2 perform the second resonance operation of the power receiving circuit 410_2. In addition, in the second resonance operation of the power receiving circuit 410_2, the loop LS2 is used as a relay resonance loop. The loop LS2 can transmit an induced power to other devices (including the device 400_1) in the same field through inductive coupling.

The disconnection or the conduction of the power switch SW2 determines the number of capacitors participating in the resonance operation of the power receiving circuit 410_2. In the first resonance operation of the power receiving circuit 410_2, two capacitors CS1_2 and CS2_2 participate in the resonance operation. In the second resonance operation of the power receiving circuit 410_2, the capacitor CS1_2 participates in the resonance operation. Therefore, the gain generated by the power receiving circuit 410_2 in the first resonance operation is greater than the gain generated by the power receiving circuit 410_2 in the second resonance operation.

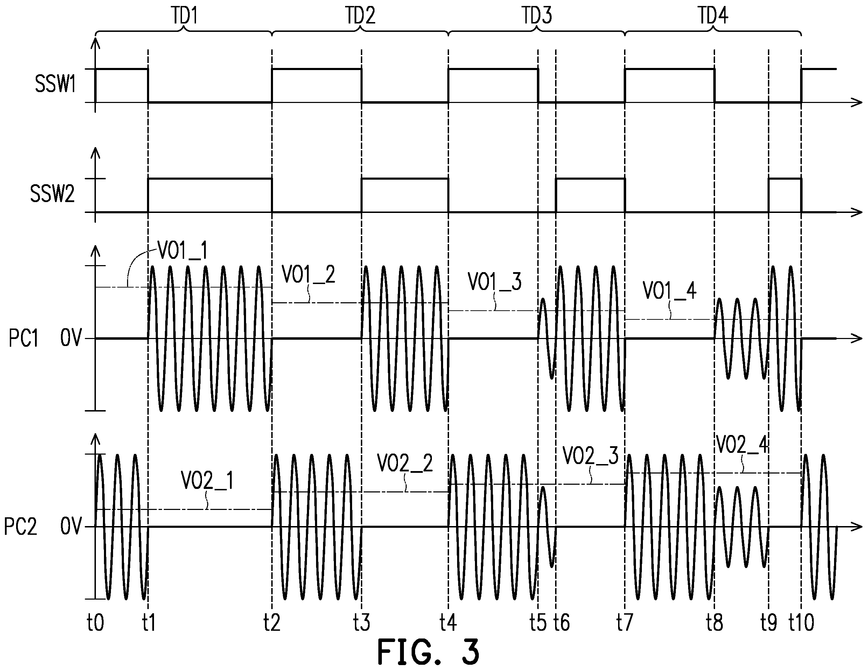

Please refer to FIG. 2 and FIG. 3 at the same time. FIG. 3 is a schematic diagram of converted power and output voltage value in different coordinated switching states according to the disclosure. In the embodiment, the output voltage value VO1 generated by the power receiving circuit 410_1 is an average voltage value generated by the power receiving circuit 410_1 in a unit time interval according to the wireless suppling power WP. The output voltage value VO2 generated by the power receiving circuit 410_2 is an average voltage value generated by the power receiving circuit 410_2 in the unit time interval according to the wireless suppling power WP.

Taking the embodiment as an example, in a unit time interval TD1, the duty cycle of the switching signal SSW1 is 30%. The duty cycle of the switching signal SSW2 is 70%. The power switch SW1 is conducted between a time point t0 and a time point t1 in response to the switching signal SSW1 having a first voltage value (for example, a high voltage value). Therefore, the power receiving circuit 410_1 executes the second resonance operation. A voltage peak value of the converted power PC1 generated by the power receiving circuit 410_1 in the second resonance operation is substantially equal to 0 volts (the disclosure is not limited thereto). In addition, the loop LS1 is used as the relay resonance loop. The loop LS1 can transmit the induced power to the device 400_2 through inductive coupling.

The power switch SW2 is disconnected between the time point t0 and the time point t1 in response to the switching signal SSW2 having a second voltage value (for example, a low voltage value). Therefore, the power receiving circuit 410_2 executes the first resonance operation. At this time, based on the power receiving circuit 410_2 executing the first resonance operation and a relay resonance M1 of the loop LS1, the converted power PC2 has the maximum voltage peak value.

In the unit time interval TD1, the power switch SW2 is conducted between the time point t1 and a time point t2 in response to the switching signal SSW2 having the first voltage value. Therefore, the power receiving circuit 410_2 executes the second resonance operation. A voltage peak value of the converted power PC2 generated by the power receiving circuit 410_2 in the second resonance operation is substantially equal to 0 volts (the disclosure is not limited thereto). In addition, the loop LS2 is used as the relay resonance loop. The loop LS2 can transmit the induced power to the device 400_1 through inductive coupling.

The power switch SW1 is disconnected between the time point t1 and the time point t2 in response to the switching signal SSW1 having the second voltage value. Therefore, the power receiving circuit 410_1 executes the first resonance operation. At this time, based on the power receiving circuit 410_1 executing the first resonance operation and a relay resonance M2 of the loop LS2, the converted power PC1 has the maximum voltage peak value.

An output voltage value VO1_1 is an average voltage value generated by the power receiving circuit 410_1 in the unit time interval TD1. An output voltage value VO2_1 is an average voltage value generated by the power receiving circuit 410_2 in the unit time interval TD 1. In the unit time interval TD1, the output voltage value VO1_1 is higher than the output voltage value VO2_1.

In a unit time interval TD2, the duty cycle of the switching signal SSW1 is 50%. The duty cycle of the switching signal SSW2 is 50%. The power switch SW1 is conducted between the time point t2 and a time point t3 in response to the switching signal SSW1 having the first voltage value. Therefore, the power receiving circuit 410_1 executes the second resonance operation. The voltage peak value of the converted power PC 1 generated by the power receiving circuit 410_1 in the second resonance operation is substantially equal to 0 volts. In addition, the loop LS1 is used as the relay resonance loop. The loop LS1 can transmit the induced power to the device 400_2 through inductive coupling.

The power switch SW2 is disconnected between time point t2 and time point t3 in response to the switching signal SSW2 having the second voltage value. Therefore, the power receiving circuit 410_2 executes the first resonance operation. At this time, based on the power receiving circuit 410_2 executing the first resonance operation and the relay resonance M1 of the loop LS1, the converted power PC2 has the maximum voltage peak value.

In the unit time interval TD2, the power switch SW2 is conducted between the time point t3 and a time point t4 in response to the switching signal SSW2 having the first voltage value. Therefore, the power receiving circuit 410_2 executes the second resonance operation. The voltage peak value of the converted power PC2 generated by the power receiving circuit 410_2 in the second resonance operation is substantially equal to 0 volts (the disclosure is not limited thereto). In addition, the loop LS2 is used as the relay resonance loop. The loop LS2 can transmit the induced power to the device 400_1 through inductive coupling.

The power switch SW1 is disconnected between the time point t3 and the time point t4 in response to the switching signal SSW1 having the second voltage value. Therefore, the power receiving circuit 410_1 executes the first resonance operation. At this time, based on the power receiving circuit 410_1 executing the first resonance operation and the relay resonance M2 of the loop LS2, the converted power PC1 has the maximum voltage peak value.

An output voltage value VO1_2 is an average voltage value generated by the power receiving circuit 410_1 in the unit time interval TD2. An output voltage value VO2_2 is an average voltage value generated by the power receiving circuit 410_2 in the unit time interval TD2. It should be noted that in the unit time intervals TD1 and TD2, the output voltage values VO1_1 and VO1_2 are not the same. The output voltage values VO1_1 and VO1_2 are positively correlated with a time length of the power switch SW1 in a disconnected state in the unit time intervals TD1 and TD2, and are negatively correlated with a time length of the power switch SW2 in the disconnected state in the unit time intervals TD1 and TD2. Similarly, the output voltage values VO2_1 and VO2_2 are not the same. The output voltage values VO2_1 and VO2_2 are positively correlated with the time length of the power switch SW2 in the disconnected state in the unit time intervals TD1 and TD2, and are negatively correlated with the time length of the power switch SW1 in the disconnected state in the unit time intervals TD1 and TD2. It can be seen that the output voltage values VO1_1, VO1_2, VO2_1, and VO2_2 may be determined by the duty cycles of the switching signals SSW1 and SSW2.

In a unit time interval TD3, the duty cycle of the switching signal SSW1 is 50%. The duty cycle of the switching signal SSW2 is 40%. Therefore, the unit time interval TD3 has a dead time interval. A time length of the dead time interval is 10% of a time length of the unit time interval TD3. The power switch SW1 is conducted between the time point t4 and a time point t5. Therefore, the power receiving circuit 410_1 executes the second resonance operation. The voltage peak value of the converted power PC1 generated by the power receiving circuit 410_1 in the second resonance operation is substantially equal to 0 volts. In addition, the loop LS1 is used as the relay resonance loop. The loop LS1 can transmit the induced power to the device 400_2 through inductive coupling.

The power switch SW2 is disconnected between the time point t4 and the time point t5. Therefore, the power receiving circuit 410_2 executes the first resonance operation. At this time, based on the power receiving circuit 410_2 executing the first resonance operation and the relay resonance M1 of the loop LS1, the converted power PC2 has the maximum voltage peak value.

In the dead time interval between the time point t5 and a time point t6, the switching signals SSW1 and SSW2 are both disconnected. Therefore, the power receiving circuits 410_1 and 410_2 execute the first resonance operation. The voltage peak value of the converted power PC1 is approximately the same as the voltage peak value of the converted power PC2 (the disclosure is not limited thereto). In other words, in the dead time interval, the wireless suppling power WP is evenly distributed to the power receiving circuits 410_1 and 410_2.

In the unit time interval TD3, the power switch SW2 is conducted between the time point t6 and a time point t7. Therefore, the power receiving circuit 410_2 executes the second resonance operation. The voltage peak value of the converted power PC2 generated by the power receiving circuit 410_2 in the second resonance operation is substantially equal to 0 volts (the disclosure is not limited thereto). In addition, the loop LS2 is used as the relay resonance loop. The loop LS2 can transmit the induced power to the device 400_1 through inductive coupling.

The power switch SW1 is disconnected between the time point t6 and the time point t7. Therefore, the power receiving circuit 410_1 executes the first resonance operation. At this time, based on the power receiving circuit 410_1 executing the first resonance operation and the relay resonance M2 of the loop LS2, the converted power PC1 has the maximum voltage peak value.

Compared with the unit time interval TD2, the unit time interval TD3 includes the dead time interval. Therefore, an output voltage value VO1_3 is lower than the output voltage value VO1_2. Therefore, an output voltage value VO2_3 is higher than the output voltage value VO2_2. In other words, the time length of the dead time interval can determine the output voltage values VO1_3 and VO2_3.

In a unit time interval TD4, the duty cycle of the switching signal SSW1 is 50%. The duty cycle of the switching signal SSW2 is 20%. Therefore, the unit time interval TD4 has the dead time interval. The time length of the dead time interval is 30% of a time length of the unit time interval TD4. The power switch SW1 is conducted between the time point t7 and a time point t8. Therefore, the power receiving circuit 410_1 executes the second resonance operation. The voltage peak value of the converted power PC1 generated by the power receiving circuit 410_1 in the second resonance operation is substantially equal to 0 volts. In addition, the loop LS1 is used as the relay resonance loop. The loop LS1 can transmit the induced power to the device 400_2 through inductive coupling.

The power switch SW2 is disconnected between the time point t7 and the time point t8. Therefore, the power receiving circuit 410_2 executes the first resonance operation. At this time, based on the power receiving circuit 410_2 executing the first resonance operation and the relay resonance M1 of the loop LS1, the converted power PC2 has the maximum voltage peak value.

In the dead time interval between the time point t8 and a time point t9, the switching signals SSW1 and SSW2 are both disconnected. Therefore, the power receiving circuits 410_1 and 410_2 execute the first resonance operation. The voltage peak value of the converted power PC1 is approximately the same as the voltage peak value of the converted power PC2 (the disclosure is not limited thereto). In other words, in the dead time interval, the wireless suppling power WP is evenly distributed to the power receiving circuits 410_1 and 410_2.

In the unit time interval TD4, the power switch SW2 is conducted between the time point t9 and a time point t10. Therefore, the power receiving circuit 410_2 executes the second resonance operation. The voltage peak value of the converted power PC2 generated by the power receiving circuit 410_2 in the second resonance operation is substantially equal to 0 volts (the disclosure is not limited thereto). In addition, the loop LS2 is used as the relay resonance loop. The loop LS2 can transmit the induced power to the device 400_1 through inductive coupling.

The power switch SW1 is disconnected between the time point t9 and the time point t10. Therefore, the power receiving circuit 410_1 executes the first resonance operation. At this time, based on the power receiving circuit 410_1 executing the first resonance operation and the relay resonance M2 of the loop LS2, the converted power PC1 has the maximum voltage peak value.

Compared with the unit time interval TD3, the unit time interval TD4 includes the dead time interval. Therefore, an output voltage value VO1_4 is lower than the output voltage value VO1_3. Therefore, an output voltage value VO2_4 is higher than the output voltage value VO2_3.

In the embodiment, the switching signals SSW1 and SSW2 may respectively be pulse width modulation (PWM) signals. The duty cycles of the switching signals SSW1 and SSW2 can be used to determine the output voltage values VO1_1 to VO1_4 and VO2_1 to VO2_4.

Please return to the embodiment of FIG. 2. In the embodiment, the power receiving circuit 410_1 also includes a filter circuit 413_1. The filter circuit 413_1 is coupled to the rectify circuit 412_1. The filter circuit 413_1 filters out noise of the output power PO1. The filter circuit 413_1 may be implemented by a low-pass filter. For example, the filter circuit 413_1 includes an inductor LF1 and a capacitor CF1. The inductor LF1 is coupled between a first output terminal of the power receiving circuit 410_1 and a first terminal of the rectify circuit 412_1. A first terminal of the capacitor CF1 is coupled to the first output terminal of the power receiving circuit 410_1. A second terminal of the capacitor CF1 is coupled to a second output terminal of the power receiving circuit 410_1 and a second terminal of the rectify circuit 412_1. The power receiving circuit 410_2 also includes a filter circuit 413_2. The filter circuit 413_2 is coupled to the rectify circuit 412_2. The filter circuit 413_2 filters out noise of the output power PO2. The filter circuit 413_2 may be implemented by a low-pass filter. For example, the filter circuit 413_2 includes an inductor LF2 and a capacitor CF2. The inductor LF2 is coupled between a first output terminal of the power receiving circuit 410_2 and a first terminal of the rectify circuit 412_2. A first terminal of the capacitor CF2 is coupled to the first output terminal of the power receiving circuit 410_2. A second terminal of the capacitor CF2 is coupled to a second output terminal of the power receiving circuit 410_2 and a second terminal of the rectify circuit 412_2.

In some embodiments, the first terminal of the power switch SW1 is coupled to the first terminal of the capacitor CS1_1. The second terminal of the power switch SW1 is coupled to the second terminal of the capacitor CS1_1. When the power switch SW1 is conducted, the capacitor CS1_1 is bypassed. In some embodiments, the first terminal of the power switch SW2 is coupled to the first terminal of the capacitor CS1_2. The second terminal of the power switch SW2 is coupled to the second terminal of the capacitor CS1_2. When the power switch SW2 is conducted, the capacitor CS1_2 is bypassed.

In some embodiments, the first terminal of the power switch SW1 is coupled to the second terminal of the capacitor CS2_1. The second terminal of the power switch SW1 is coupled to the second terminal of the loop LS1. In some embodiments, the first terminal of the power switch SW2 is coupled to the second terminal of the capacitor CS2_2. The second terminal of the power switch SW2 is coupled to the second terminal of the loop LS2.

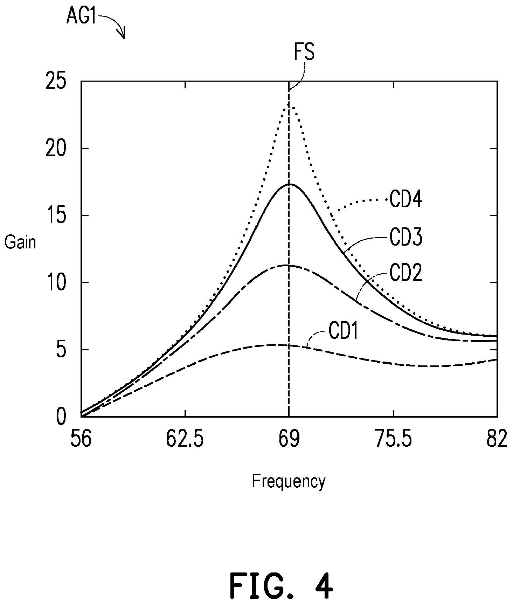

Please refer to FIG. 2, FIG. 3, and FIG. 4 at the same time. FIG. 4 is a schematic diagram of gain according to an embodiment of the disclosure. FIG. 4 shows a gain AG1 of the device 400_1 under different load conditions. A situation of FIG. 4 may be that the device 400_1 is in the field and the device 400_2 is not in the field. In the embodiment, a load of a load condition CD1 is heavier than a load of a load condition CD2. The load of the load condition CD2 is heavier than a load of a load condition CD3. The load of the load condition CD3 is heavier than a load of a load condition CD4. Under the load condition CD4, the gain of the device 400_1 at a resonance frequency FS is 23 times. The resonance frequency FS of the embodiment is, for example, 69 kHz (the disclosure is not limited to the resonance frequency FS).

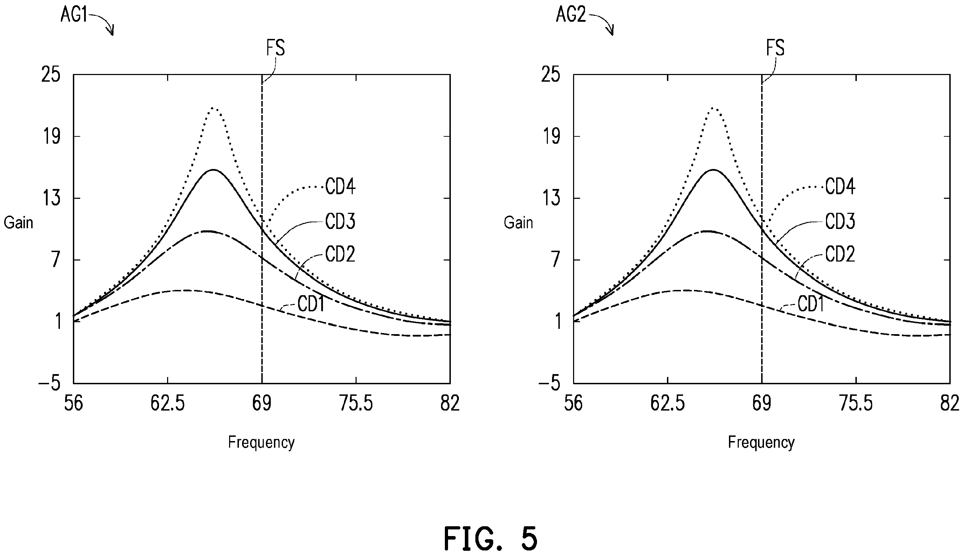

Please refer to FIG. 2, FIG. 3, and FIG. 5 at the same time. FIG. 5 is a schematic diagram of gain in a first coordinated switching state according to an embodiment of the disclosure.

FIG. 5 shows the gain AG1 of the device 400_1 under different load conditions and a gain AG2 of the device 400_2 under different load conditions. The first coordinated switching state may be a coordinated switching state of the devices 400_1 and 400_2 in the dead time interval. The dead time interval may be between the time point t5 and the time point t6. The dead time interval may be between the time point t8 and the time point t9. In the embodiment, the load of the load condition CD1 is heavier than the load of the load condition CD2. The load of the load condition CD2 is heavier than the load of the load condition CD3. The load of the load condition CD3 is heavier than the load of the load condition CD4. Under the load condition CD4, the gains of the devices 400_1 and 400_2 at the resonance frequency FS is 12 times.

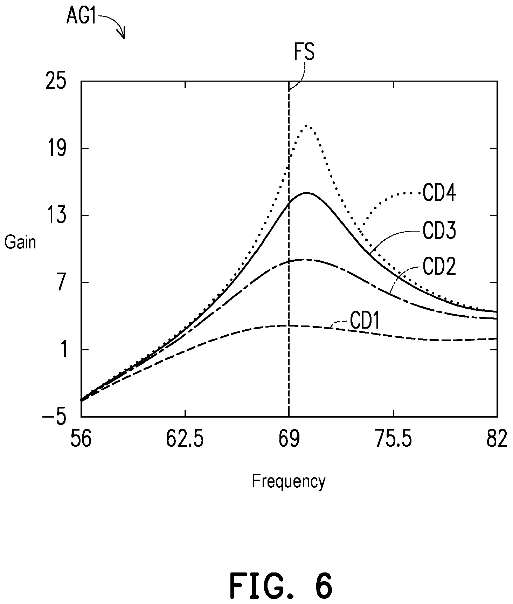

Please refer to FIG. 2, FIG. 3, and FIG. 6 at the same time. FIG. 6 is a schematic diagram of gain in a second coordinated switching state according to an embodiment of the disclosure. FIG. 6 shows the gain AG1 of the device 400_1 under different load conditions. The second coordinated switching state may be a switching state of the switch SW1 being disconnected and the switch SW2 being conducted. In the embodiment, the load of the load condition CD1 is heavier than the load of the load condition CD2. The load of the load condition CD2 is heavier than the load of the load condition CD3. The load of the load condition CD3 is heavier than the load of the load condition CD4. Under the load condition CD4, the gain of the device 400_1 at the resonance frequency FS is 18 times.

It can be seen that the gains AG1 and AG2 may be adjusted based on different coordinated switching states.

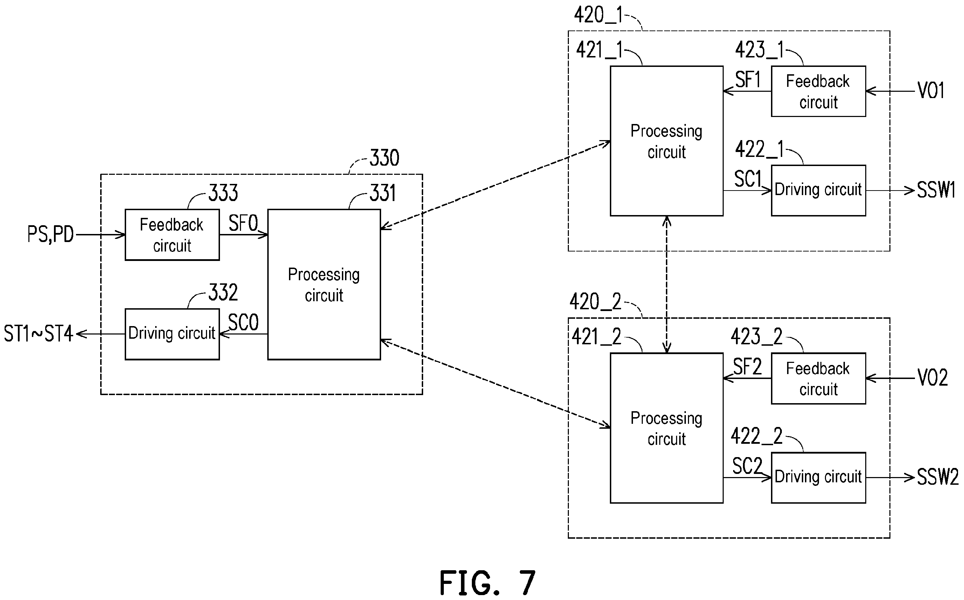

Please refer to FIG. 2 and FIG. 7 at the same time. FIG. 7 is a schematic diagram of communication of a wireless charging system according to an embodiment of the disclosure. In the embodiment, FIG. 7 shows the control circuits 330, 420_1, and 420_2.

In the embodiment, the control circuit 420_1 includes a processing circuit 421_1 and a driving circuit 422_1. The processing circuit 421_1 communicates wirelessly with the control circuit 420_2 to generate a control signal SC1. The driving circuit 422_1 is coupled to the processing circuit 421_1 and the control terminal of the power switch SW1. The driving circuit 422_1 determines the switching state of the power switch SW1 in response to the control signal SC1.

The control circuit 420_1 also includes a feedback circuit 423_1. The feedback circuit 423_1 is coupled to the processing circuit 421_1 and the power receiving circuit 410_1. The feedback circuit 423_1 receives the output voltage value VO1. The feedback circuit 423_1 judges whether the output voltage value VO1 meets the power specification of the device 400_1. When the output voltage value VO1 does not meet the power specification of the device 400_1, the feedback circuit 423_1 provides a feedback signal SF1 to the processing circuit 421_1. The processing circuit 421_1 adjusts the control signal SC1 according to the feedback signal SF1. Therefore, the switching state of the power switch SW1 is adjusted accordingly, so that the output voltage value VO1 can meet the power specification of the device 400_1. In some embodiments, the feedback circuit 423_1 judges whether the output voltage value VO1 and a current value of the converted power PC1 meet the power specifications of the device 400_1. When at least one of the output voltage value VO1 and the current value of the converted power PC1 does not meet the power specifications of the device 400_1, the feedback circuit 423_1 provides the feedback signal SF1 to the processing circuit 421_1.

In the embodiment, the control circuit 420_2 includes a processing circuit 421_2 and a driving circuit 422_2. The processing circuit 421_2 communicates wirelessly with the control circuit 420_1 to generate a control signal SC2. The driving circuit 422_2 is coupled to the processing circuit 421_2 and the control terminal of the power switch SW1. The driving circuit 422_2 determines the switching state of the power switch SW2 in response to the control signal SC2.

The control circuit 420_2 also includes a feedback circuit 423_2. The feedback circuit 423_2 is coupled to the processing circuit 421_2 and the power receiving circuit 410_2. The feedback circuit 423_2 receives the output voltage value VO2. The feedback circuit 423_2 judges whether the output voltage value VO2 meets the power specification of the device 400_2. When the output voltage value VO2 does not meet the power specification of the device 400_2, the feedback circuit 423_2 provides a feedback signal SF2 to the processing circuit 421_2. The processing circuit 421_2 adjusts the control signal SC2 according to the feedback signal SF2. Therefore, the switching state of the power switch SW2 is adjusted accordingly, so that the output voltage value VO2 may meet the power specification of the device 400_2. In some embodiments, the feedback circuit 423_2 judges whether the output voltage value VO2 and a current value of the converted power PC2 meet the power specifications of the device 400_2. When at least one of the output voltage value VO2 and the current value of the converted power PC2 does not meet the power specifications of the device 400_2, the feedback circuit 423_2 provides the feedback signal SF2 to the processing circuit 421_2.

In the embodiment, the control circuit 330 includes a processing circuit 331, a driving circuit 332, and a feedback circuit 333. The processing circuit 331 communicates wirelessly with the processing circuits 421_1 and 421_2 to generate a control signal SC0. The driving circuit 332 is coupled to the processing circuit 331 and the inverter 310. The driving circuit 332 provides operating signals ST1 to ST4 to control the inverter 310 in response to the control signal SC0. Therefore, the wireless power supply platform 300 may provide the corresponding wireless suppling power WP based on the wireless communication between the processing circuit 331 and the processing circuits 421_1 and 421_2.

The feedback circuit 333 is coupled to the processing circuit 331. The feedback circuit 423_2 receives at least one of the input power PS and the converted power PD. The feedback circuit 423_2 provides a feedback signal SF0 according to at least one of the input power PS and the converted power PD. For example, the feedback circuit 423_2 provides the feedback signal SF0 according to at least one of a voltage value or a current value of the input power PS and a voltage value or a current value of the converted power PD. The processing circuit 331 adjusts the control signal SC0 according to the feedback signal SF0. Therefore, the converted power PD can be stabilized.

In the embodiment, the processing circuits 331, 421_1, and 421_2 are respectively, for example, a central processing unit (CPU), other programmable general-purpose or specific-purpose microprocessors, digital signal processors (DSP), programmable controllers, application specific integrated circuits (ASIC), programmable logic devices (PLD), other similar devices, or a combination of the devices, which may load and execute a computer program. In addition, the processing circuits 331, 421_1, and 421_2 may use any wireless communication protocol for communication. For example, the processing circuits 331, 421_1, and 421_2 may use the Bluetooth communication protocol for communication (the disclosure is not limited thereto).

In summary, a first device includes a first power receiving circuit, a first power switch, and a first control circuit. A second device includes a second power receiving circuit, a second power switch, and a second control circuit. The first control circuit communicates with the second control circuit to determine a coordinated switching state of the first power switch and the second power switch. The coordinated switching state determines a first output voltage value generated by the first power receiving circuit according to a wireless suppling power and a second output voltage value generated by the second power receiving circuit according to the wireless suppling power. In this way, based on the communication between the second control circuit and the first control circuit, the first device and the second device can both use the coordinated switching state to obtain an output voltage value that meets power specifications.

Although the disclosure has been disclosed in the above embodiments, the embodiments are not intended to limit the disclosure. Persons skilled in the art may make some changes and modifications without departing from the spirit and scope of the disclosure. Therefore, the protection scope of the disclosure shall be defined by the appended claims.

## Claims

1. A wireless charging system (10, 20), comprising:
a wireless power supply platform (100, 300), configured to provide a wireless suppling power (WP);
a first device (200_1, 200_2, 400_1, 400_2), comprising:
a first power receiving circuit (210_1, 210_2, 410_1, 410_2);
a first power switch (SW1, SW2), coupled to the first power receiving circuit (210_1, 210_2, 410_1, 410_2); and
a first control circuit (220_1, 220_2, 330, 420_1, 420_2), coupled to the first power switch (SW1, SW2); and
a second device (200_1, 200_2, 400_1, 400_2), comprising:
a second power receiving circuit (210_1, 210_2, 410_1, 410_2);
a second power switch (SW1, SW2), coupled to the second power receiving circuit (210_1, 210_2, 410_1, 410_2); and
a second control circuit (220_1, 220_2, 330, 420_1, 420_2), coupled to the second power switch (SW1, SW2) and configured to communicate with the first control circuit (220_1, 220_2, 330, 420_1, 420_2) to determine a coordinated switching state of the first power switch (SW1, SW2) and the second power switch (SW1, SW2),
wherein the coordinated switching state determines a first output voltage value (VO1, VO1_1~VO1_4, VO2, VO2_1~VO2_4) generated by the first power receiving circuit (210_1, 210_2, 410_1, 410_2) according to the wireless suppling power (WP) and a second output voltage value (VO1, VO1_1~VO1_4, VO2, VO2_1~VO2_4) generated by the second power receiving circuit (210_1, 210_2, 410_1, 410_2) according to the wireless suppling power (WP).

2. The wireless charging system (10, 20) according to claim 1, wherein:
the wireless power supply platform (100, 300) provides the wireless suppling power (WP) to a field, and
when the first device (200_1, 200_2, 400_1, 400_2) and the second device (200_1, 200_2, 400_1, 400_2) enter the field, the second control circuit (220_1, 220_2, 330, 420_1, 420_2) communicates with the first control circuit (220_1, 220_2, 330, 420_1, 420_2).

3. The wireless charging system (10, 20) according to claim 1, wherein:
the first output voltage value (VO1, VO1_1~VO1_4, VO2, VO2_1~VO2_4) is an average voltage value generated by the first power receiving circuit (210_1, 210_2, 410_1, 410_2) in a unit time interval (TD1, TD2, TD3, TD4) according to the wireless suppling power (WP), and
the second output voltage value (VO1, VO1_1~VO1_4, VO2, VO2_1~VO2_4) is an average voltage value generated by the second power receiving circuit (210_1, 210_2, 410_1, 410_2) in the unit time interval (TD1, TD2, TD3, TD4) according to the wireless suppling power (WP).

4. The wireless charging system (10, 20) according to claim 3, wherein:
the first output voltage value (VO1, VO1_1~VO1_4, VO2, VO2_1~VO2_4) is positively correlated with a time length of the first power switch (SW1, SW2) in a disconnected state in the unit time interval (TD1, TD2, TD3, TD4), and
the first output voltage value (VO1, VO1_1~VO1_4, VO2, VO2_1~VO2_4) is negatively correlated with a time length of the second power switch (SW1, SW2) in a disconnected state in the unit time interval (TD1, TD2, TD3, TD4).

5. The wireless charging system (10, 20) according to claim 3, wherein:
the second output voltage value (VO1, VO1_1~VO1_4, VO2, VO2_1~VO2_4) is positively correlated with a time length of the second power switch (SW1, SW2) in a disconnected state in the unit time interval (TD1, TD2, TD3, TD4), and
the second output voltage value (VO1, VO1_1~VO1_4, VO2, VO2_1~VO2_4) is negatively correlated with a time length of the first power switch (SW1, SW2) in a disconnected state in the unit time interval (TD1, TD2, TD3, TD4).

6. The wireless charging system (10, 20) according to claim 1, wherein the first power receiving circuit (210_1, 210_2, 410_1, 410_2) comprises:
a loop (LP, LS1, LS2);
a resonance circuit (120, 320, 411_1, 41 1_2), coupled to the first power switch (SW1, SW2) and the loop (LP, LS1, LS2), and configured to receive the wireless suppling power (WP) through the loop (LP, LS1, LS2), and gain the wireless suppling power (WP) to generate a converted power (PC1, PC2, PD); and
a rectify circuit (412_1, 411_2), coupled to the resonance circuit (120, 320, 411_1, 411_2) and configured to rectify the converted power (PC1, PC2, PD) to generate an output power (PO1, PO2) with the first output voltage value (VO1, VO1_1~VO1_4, VO2, VO2_1~VO2_4).

7. The wireless charging system (10, 20) according to claim 6, wherein the first power receiving circuit (210_1, 210_2, 410_1, 410_2) further comprises:
a battery module (BT1, BT2), coupled to the first power receiving circuit (210_1, 210_2, 410_1, 410_2) and configured to store the output power (PO1, PO2).

8. The wireless charging system (10, 20) according to claim 7, wherein the battery module (BT1, BT2) comprises an aluminum-ion battery.

9. The wireless charging system (10, 20) according to claim 6, wherein:
when the first power switch (SW1, SW2) is disconnected, the resonance circuit (120, 320, 411_1, 411_2) and the loop (LP, LS1, LS2) perform a first resonance operation, and
when the first power switch (SW1, SW2) is conducted, the resonance circuit (120, 320, 411_1, 411_2) and the loop (LP, LS1, LS2) perform a second resonance operation.

10. The wireless charging system (10, 20) according to claim 6, wherein the resonance circuit (120, 320, 411_1, 411_2) comprises:
a first capacitor (CF1, CF2, CR1, CR2, CS1_1, CS2_1, CS1_2, CS2_2), wherein a first terminal of the first capacitor (CF1, CF2, CR1, CR2, CS1_1, CS2_1, CS1_2, CS2_2) is coupled to a first terminal of the loop (LP, LS1, LS2), and a second terminal of the first capacitor (CF1, CF2, CR1, CR2, CS1_1, CS2_1, CS1_2, CS2_2) is coupled to a first terminal of the first power switch (SW1, SW2); and
a second capacitor (CF1, CF2, CR1, CR2, CS1_1, CS2_1, CS1_2, CS2_2), wherein a first terminal of the second capacitor (CF1, CF2, CR1, CR2, CS1_1, CS2_1, CS1_2, CS2_2) is coupled to the second terminal of the first capacitor (CF1, CF2, CR1, CR2, CS1_1, CS2_1, CS1_2, CS2_2), and a second terminal of the second capacitor (CF1, CF2, CR1, CR2, CS1_1, CS2_1, CS1_2, CS2_2) is coupled to a second terminal of the loop (LP, LS1, LS2) and a second terminal of the first power switch (SW1, SW2).

11. The wireless charging system (10, 20) according to claim 10, wherein:
when the first power switch (SW1, SW2) is disconnected, the first capacitor (CF1, CF2, CR1, CR2, CS1_1, CS2_1, CS1_2, CS2_2), the second capacitor (CF1, CF2, CR1, CR2, CS1_1, CS2_1, CS1_2, CS2_2), and the loop (LP, LS1, LS2) perform a first resonance operation,
when the first power switch (SW1, SW2) is conducted, the first capacitor (CF1, CF2, CR1, CR2, CS1_1, CS2_1, CS1_2, CS2_2) and the loop (LP, LS1, LS2) perform a second resonance operation, and
a gain (AG1, AG2) generated by the first power receiving circuit (210_1, 210_2, 410_1, 410_2) in the first resonance operation is greater than a gain (AG1, AG2) generated by the first power receiving circuit (210_1, 210_2, 410_1, 410_2) in the second resonance operation.

12. The wireless charging system (10, 20) according to claim 1, wherein the first control circuit (220_1, 220_2, 330, 420_1, 420_2) comprises:
a processing circuit (331, 421_1, 421_2), configured to communicate wirelessly with the second control circuit (220_1, 220_2, 330, 420_1, 420_2) to generate a control signal (SCO, SC1, SC2); and
a driving circuit (332, 422_1, 422_2), coupled to the processing circuit (331,421_1,421_2) and a control terminal of the first power switch (SW1, SW2), and configured to determine a switching state of the first power switch (SW1, SW2) in response to the control signal (SCO, SC1, SC2).

13. The wireless charging system (10, 20) according to claim 12, wherein the first control circuit (220_1, 220_2, 330, 420_1, 420_2) further comprises:
a feedback circuit (333, 423_1, 423_2), coupled to the processing circuit (331, 421_1, 421_2) and the first power receiving circuit (210_1, 210_2, 410_1, 410_2), and configured to judge whether the output voltage value (VO1, VO1_1~VO1_4, VO2, VO2_1~VO2_4) meets a power specification of the first device (200_1, 200_2, 400_1, 400_2), wherein
when the output voltage value (VO1, VO1_1~VO1_4, VO2, VO2_1~VO2_4) does not meet the power specification of the first device (200_1, 200_2, 400_1, 400_2), the feedback circuit (333, 423_1, 423_2) provides a feedback signal (SF0, SF1, SF2) to the processing circuit (331, 421_1,421_2), and
the processing circuit (331, 421_1, 421_2) adjusts the control signal (SCO, SC1, SC2) in response to the feedback signal (SF0, SF1, SF2).
